# EUROPEAN PATENT SPECIFICATION

(11) **EP 3 382 477 B1**
(45) Date of publication and mention of the grant of the patent: **30.09.2020**
(21) Application number: 18164907.0
(22) Date of filing: 29.03.2018
(51) Int. Cl.: G05B 15/02

(54) **MULTI-TARGET DYNAMIC UI ACTION ELEMENT**
DYNAMISCHES MULTI-TARGET UI-AKTIONSELEMENT
ÉLÉMENT D'ACTION INTERFACE UTILISATEUR DYNAMIQUE MULTI-CIBLES

(30) Priority: 31.03.2017 US 201715476459
(43) Date of publication of application: 03.10.2018
(73) Proprietor: Otis Elevator Company, Farmington, Connecticut 06032 (US)
(72) Inventor: Baldi, Emily, Farmington, CT 06032 (US); Leong, Yew, Farmington, CT 06032 (US); Brothers, Sheryl, Farmington, CT 06032 (US)
(74) Representative: Schmitt-Nilson Schraud Waibel Wohlfrom Patentanwälte Partnerschaft mbB

(56) References cited:
- GB-A- 2 533 646
- US-A1- 2006 161 270
- US-A1- 2013 231 758
- US-A1- 2015 220 075
- US-A1- 2016 322 817

## Description

The subject matter disclosed herein generally relates to the field of building system controls, and more particularly to an apparatus and method for controlling building systems through a mobile device.

Building systems typically require physical manipulation of the actual system in order to control the system.

GB 2 533 646 A discloses a system and controller for monitoring and controlling at least two energy consuming devices within a building, the controller comprising a plurality of movement or ambient light sensors and, based on data from the sensors, the system intelligently controlling the energy consuming devices in accordance with behavioural pattern of an occupant.

US 2015/220075 A1 discloses a system and method for controlling a plurality of appliances, which may be part of a smart home or environment. The method and system according to embodiments of the invention enable using a single easily programmable controller to control a plurality of appliances, each appliance using its own pre-existing control application, with no changes of infrastructure required. Additionally, a single controller, according to embodiments of the invention may enable remote control of appliances over a wide area.

The present invention relates to a method, a building control system, and a computer program product according to the appended claims.

In addition to one or more of the features described above, or as an alternative, further embodiments of the method may include where the receiving a first input further comprises: receiving a first user sub-input; generating a list, the list including a plurality of building systems; and receiving a second user sub-input selecting a building system.

In addition to one or more of the features described above, or as an alternative, further embodiments of the method may include where the first user sub-input is a press and hold.

In addition to one or more of the features described above, or as an alternative, further embodiments of the method may include where the second user sub-input is a drag and hold.

In addition to one or more of the features described above, or as an alternative, further embodiments of the method may include prior to the receiving a first user input: generating a user interface depicting a home control icon, the home control icon depicting a selected building system.

In addition to one or more of the features described above, or as an alternative, further embodiments of the method may include where the first user input is a defined action corresponding to the selected building system depicted on the home control icon; and the first user input is used to satisfy the second user input.

In addition to one or more of the features described above, or as an alternative, further embodiments of the method may include after controlling the building system using the defined action: generating a user interface depicting a home control icon, the home control icon depicting the selected building system.

In addition to one or more of the features described above, or as an alternative, further embodiments of the method may include where the first user input is used to satisfy the second user input.

In addition to one or more of the features described above, or as an alternative, further embodiments of the method may include where the defined action is user defined.

In addition to one or more of the features described above, or as an alternative, further embodiments of the method may include prior to the receiving a first user input: receiving a user input; creating a defined action in response to the user input; assigning the defined action to a building system; and storing the defined action in a database.

In addition to one or more of the features described above, or as an alternative, further embodiments of the method may include associating the defined action with a user of a user mobile device; and storing the association in the database.

In addition to one or more of the features described above, or as an alternative, further embodiments of the method may include where the building system is at least one of a door system, an elevator system, a lighting system, and a climate control system.

In addition to one or more of the features described above, or as an alternative, further embodiments of the method may include where the controlling further comprises: unlocking a door of the door system.

In addition to one or more of the features described above, or as an alternative, further embodiments of the method may include where the controlling further comprises: calling an elevator car of the elevator system.

In addition to one or more of the features described above, or as an alternative, further embodiments of the method may include where the controlling further comprises: adjusting a light of the lighting system.

In addition to one or more of the features described above, or as an alternative, further embodiments of the method may include where the controlling further comprises: adjusting an output of the climate control system.

Technical effects of embodiments of the present disclosure include the ability control building systems through a multi-target dynamic user interface on a mobile device.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The following descriptions should not be considered limiting in any way. With reference to the accompanying drawings, like elements are numbered alike:
FIG. 1 illustrates a schematic view of a building control system, in accordance with an embodiment of the disclosure;
FIG. 2 depicts a user interface on a mobile device, in accordance with an embodiment of the disclosure;
FIG. 3 depicts a user interface on a mobile device, in accordance with an embodiment of the disclosure; and
FIGs. 4a-4d depict a defined action for a user input on a mobile device, in accordance with an embodiment of the disclosure; and
FIG. 5 is a flow diagram illustrating a method of controlling building systems, according to an embodiment of the present disclosure.

A detailed description of one or more embodiments of the disclosed apparatus and method are presented herein by way of exemplification and not limitation with reference to the Figures.

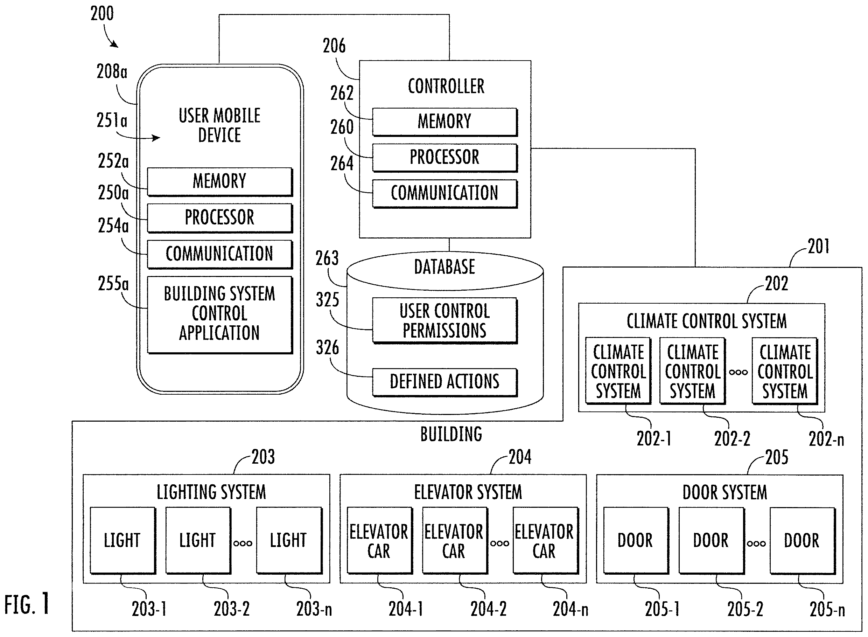

FIG. 1 depicts a building control system 200 in an example embodiment. The building control system 200 includes a plurality of building systems 202-205, such as for example, a climate control system 202, a lighting system 203, a door system 205, and an elevator system 204 installed at a building 201. The disclosure is not intended to be limited by these building system 202-205 and as may be appreciated by one of skill in the art, the building 201 may include other systems such as, for example, entertainment systems, security systems, window blind systems, plumbing system, and other any other building system known to one of skill in the art not mentioned herein that may be controlled by the building control system 200. In some embodiments, the building 201 may be a building or a collection of buildings that may or may not be physically located near each other. The building 201 may include any number of floors. Persons entering the building 201 may enter at a lobby floor, or any other floor, and may go to a destination floor via one or more conveyance devices, such as the elevator system 204. Persons entering the building 201 may be required to enter a door (e.g., doors 205-1, 205-2, ... 205-n) of the door system 205. The door (e.g., doors 205-1, 205-2, ... 205-n) may in-elude but is not limited to a door in a wall of the building, a door on the outside of the building, a garage door, and a parking lot access gate. The climate within the building 201 is controlled by a climate control system 202. There may be one or more climate control systems 202 for the building 201, such as, for example, one climate control system (e.g., climate control systems 202-1, 202-2...202-n) for each room in the building 201. The light within the building 201 is controlled by a lighting system 203. There may be one or more lighting systems 203 for the building 201, such as, for example, one lighting system (e.g., lighting systems 203-1, 203-2...203-n) for each room and/or office space (e.g. cubical) in the building 201.

The building systems 202-205 may be operably connected to one or more computing devices, such as a controller 206. The controller 206 may be configured to control dispatching operations for one or more elevator cars (e.g., elevator cars 204-1, 204-2..204-n) associated with the elevator system 204. The controller 206 may also be configured to control access to the one or more elevator cars (e.g., elevator cars 204-1, 204-2..204-n) associated with the elevator system 204. It is understood that the elevator system 204 may utilize more than one controller 206, and that each controller may control a group of elevators cars 204-1 and 204-2. Although two elevator cars 204-1 and 204-2 are shown in FIG. 1, it is understood that any number of elevators cars 204-n may be used in the elevator system 204. The elevator cars 204-1 and 204-2 may be located in the same hoistway or in different hoistways so as to allow coordination amongst elevator cars 204-1 and 204-2 in different elevator banks serving different floors. It is understood that other components of the elevator system 204 (e.g., drive, counterweight, safeties, etc.) are not depicted for ease of illustration.

Further, the controller 206 may also be configured to control access to one or more doors (e.g., doors 205-1, 205-2...205-n). It is understood that the door system 205 may utilize more than one controller 206, and that each controller may control a group of doors 205-1 and 205-2. Although two doors 205-1 and 205-2 are shown in FIG. 1, it is understood that any number of elevators cars 205-n may be used in the door system 205. It is understood that other components of the door system 205 (e.g., locks.) are not depicted for ease of illustration.

Additionally, the controller 206 may also be configured to control operation of the climate control system 202, the lighting system 203, and any other system of the building 201 known to one of skill in the art. It is understood that the climate control system 202 and the lighting system 203 may utilize more than one controller 206, and that each controller may control each system as a whole (e.g., 202 and 203) or each separate component (e.g. 202-1 - 202-n, 203-1 - 203-n). It is understood that other components of the climate control system 202 and the lighting system 203 are not depicted for ease of illustration.

The controller 206 may include a processor 260, memory 262 and communication module 264 as shown in FIG. 1. The processor 260 can be any type or combination of computer processors, such as a microprocessor, microcontroller, digital signal processor, application specific integrated circuit, programmable logic device, and/or field programmable gate array. The memory 262 is an example of a non-transitory computer readable storage medium tangibly embodied in the controller 206 including executable instructions stored therein, for instance, as firmware. The communication module 264 may implement one or more communication protocols as described in further detail herein.

Also shown in FIG. 1 is a user mobile device 208a. The user mobile device 208a may include a device that is typically carried by a person, such as a phone, PDA, smart watch, tablet, laptop, etc. The mobile device 208a may have a touch screen 251a to allow user input. The user mobile device 208a may include a processor 250a, memory 252a and communication module 254a as shown in FIG. 1. The processor 250a can be any type or combination of computer processors, such as a microprocessor, microcontroller, digital signal processor, application specific integrated circuit, programmable logic device, and/or field programmable gate array. The memory 252a is an example of a non-transitory computer readable storage medium tangibly embodied in the user mobile device 208a including executable instructions stored therein, for instance, as firmware. The communication module 254a may implement one or more communication protocols as described in further detail herein. In a non-limiting example user mobile device 208a belongs to a resident or employee of the building 201 who currently has access to control at least one building system 202-205 of the building 201. Each user may have specific user control permissions 325 granting each user the ability to control selected building systems 202-205 through a building system control application 255a on the user mobile device 208a belonging to the user. For example, the control permissions 325 may dictate that a specific user may open a specific door. The control permissions 325 may be established by a manager of the building control system 200. Each user may have defined actions 326 to be used in controlling each building system 202-205 through the building system control application 255a, which will be discussed further below. The defined actions 326 may be user defined based on specific user inputs that are entered into the user mobile device 208a. For example, the defined action 326 may be drawing a zig-zag on the touch screen 251a of the user device 208a. The defined actions 326 may be stored in a database 263. The database 263 may be operatively connected to the controller 206 or stored within the controller 206. In one embodiment, the database 263 may be stored offsite, remotely, or in the cloud.

The user mobile device 208a and the controller 206 communicate with one another. For example, the user mobile device 208a and the controller 206 may communicate with one another when proximate to one another (e.g., within a threshold distance). The user mobile device 208a and the controller 206 may communicate over a wireless network, such as 802.11x (WiFi), short-range radio (Bluetooth), cellular, satellite, etc. In some embodiments, the controller 206 may include, or be associated with (e.g., communicatively coupled to) a networked element, such as kiosk, beacon, hall call fixture, lantern, bridge, router, network node, door lock, elevator control panel, building intercom system, etc. The networked element may communicate with the user mobile device 208a using one or more communication protocols or standards. For example, the networked element may communicate with the user mobile device 208a using near field communications (NFC). In other embodiments, the controller 206 may establish communication with a user mobile device 208a that is outside of the building 201. This connection may be established with various technologies including GPS, triangulation, or signal strength detection, by way of non-limiting example. In example embodiments, the user mobile device 208a communicates with the controller 206 over multiple independent wired and/or wireless networks. Embodiments are intended to cover a wide variety of types of communication between the user mobile device 208a and controller 206, and embodiments are not limited to the examples provided in this disclosure. Communication between the user mobile device 208a and the controller 206 will allow the controller 206 to determine the location of the user mobile device 208a in relation to each building system 202-205.

Embodiments generate a user interface on the user mobile device 208a through the building system control application 255a. The building system control application 255a may be used for users to control building systems 202-205 through a user mobile device 208a. In a few non-limiting examples, a user may use the building system control application 255a to increase the heat output of a climate control system 202-1, turn on a light 203-1, call an elevator car 204-1, and unlock a door 205-1. An identification credential on the user mobile device 208a will identify each user mobile device 208a to the controller 206.

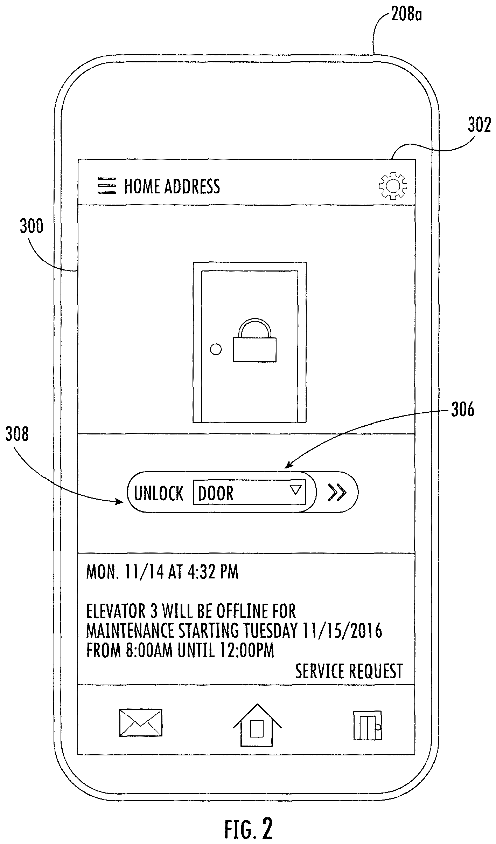

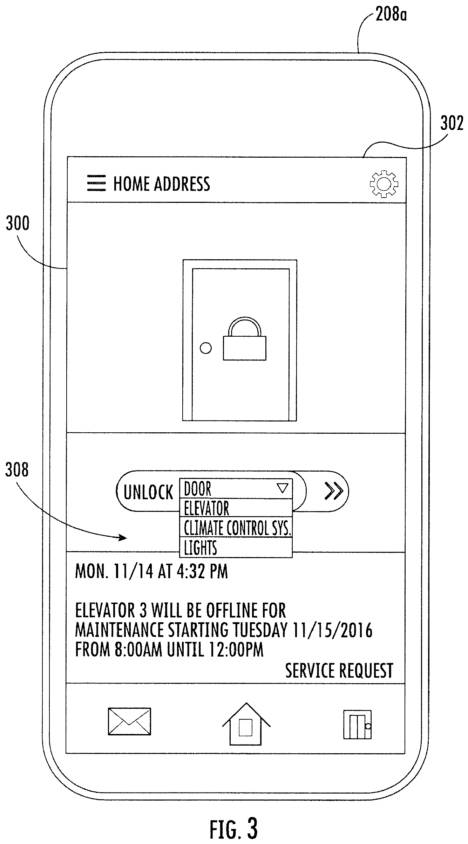

FIGs. 2, 3, and 4a-4d depict an example user interface 300 on user mobile device 208a. Referring to FIG. 2, when the user mobile device 208a launches the building system control application 255a, a control screen 302 may be presented as shown in FIG. 2. The control screen 302 may show a home control icon 304 for easy access to control a selected building system, such as, for example, a climate control system 202, a lighting system 203, an elevator system 204, and a door system 205. In the example of FIG. 2a, the door system 205 depicts on the home control icon 304 on the control screen 302 when the user mobile device 208a launches the building system control application 255a, thus the door system 205 is the selected building system. The selected building system displayed within the home control icon 304 may be adjusted depending on user preferences. If the user does not want to control the building system currently depicted on the home control icon 304 then the user may select an arrow 306 to open a list 308 that may be seen in FIG. 3. It is understood, that the list 308 is shown for ease of explanation and that any other method of displaying a list of options or selection interfaces may be used. The list 308 may be displayed as a textual drop-down list of building systems 202-205(drop-down list shown in FIG. 3) or as individual icons, where each icon represents a building system (icons not shown for simplicity). In an example, another selection interface may include a pop-up/modal window with a list or grid of selections. The pop-up/modal window may be a new page state, such as a full-screen overlay. In another example, the selection interface may be a vertical or horizontal scrolling lightbox of selection options, it could be text, illustrations or photographs. In another example, the selection interface may be a long press on the arrow 306 to open a pop-up scroller/selector (e.g. a scroll-wheel picker). The arrow 306 may be selected by the user pressing on the home control icon 304 and not swiping. The arrow 306 may also be selected by pressing the arrow 306 directly.

Referring to the FIG. 3, the list 208 may contain each building system 202-205 that the user has access to as defined by the user control permissions 326. The user control permissions 326 may be set by a manager of the building control system 200. In an example, the user control permissions may allow a selected user to control a selected building system. It is understood that only four building system 202-205 are shown for simplicity and the list 208 may contain more or less options for each building system 202-205 and additional building systems not mentioned herein. Once the list 208 appears the user may select the building system 202-205 they would like to control by sliding down and pressing the desired building system.

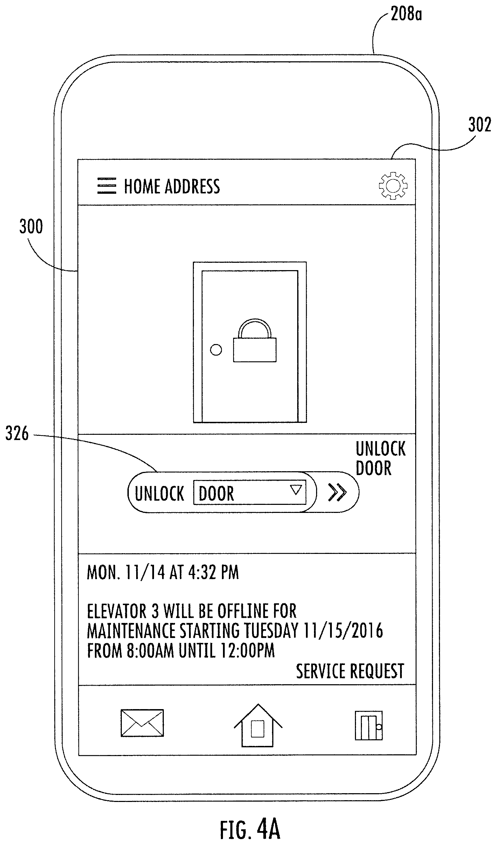

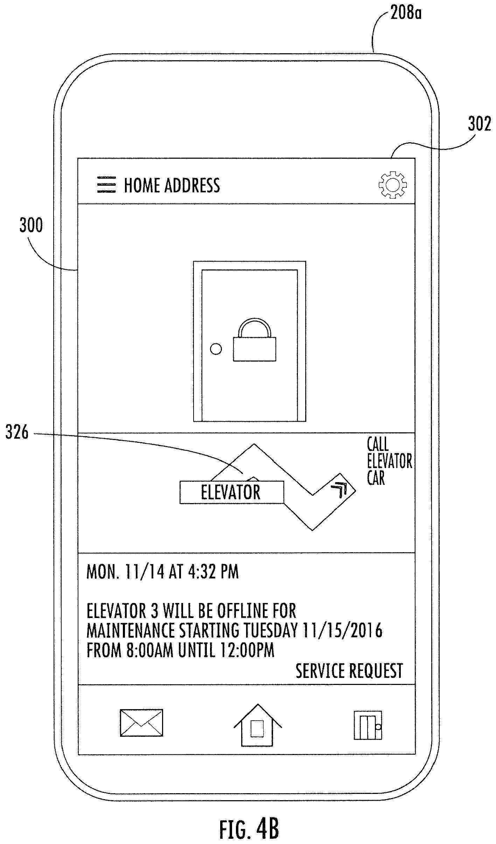

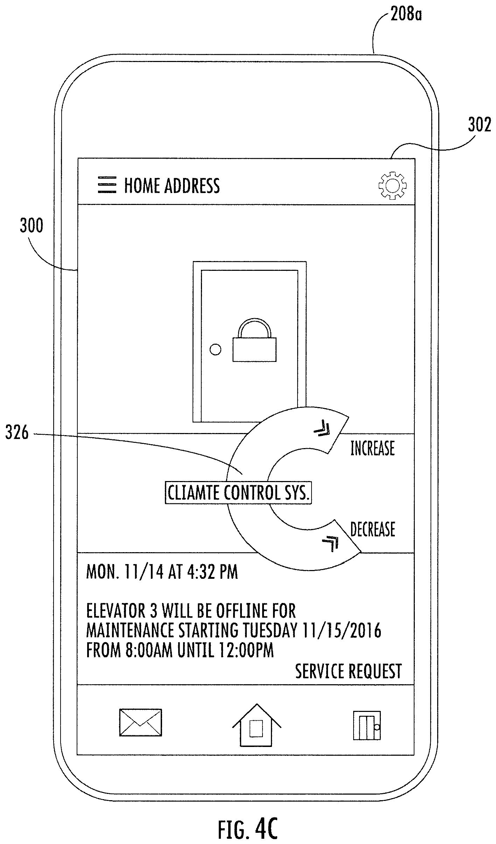

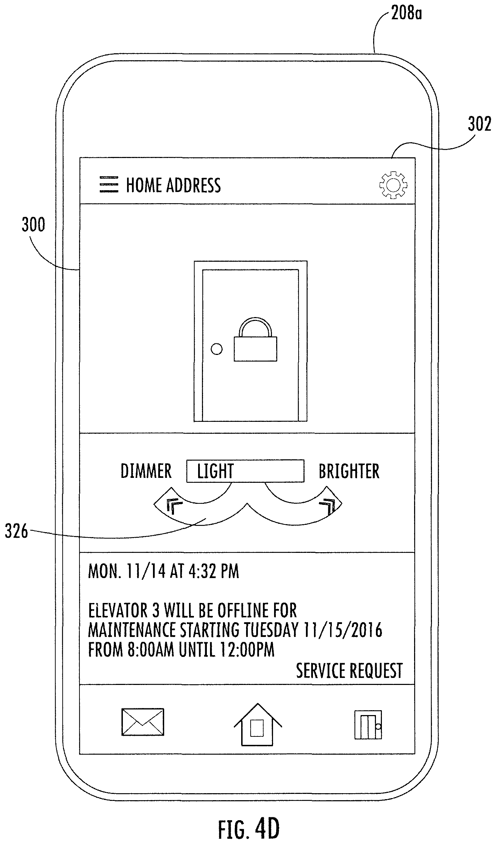

Referring now to FIGs. 4a-4d with continued reference to FIGs. 1-3. Once the building system 202-205 is selected in the list 208 then each building system 202-205 has a defined action 326 assigned to control each building system. The defined action 326 may be established by the user of the user mobile device 208a and saved in the 263 database. The user may use user input to create the defined action 326. In an embodiment, the user input is a dynamic action, such as for example a motion while touching the touch screen 251a. The defined action 326 may also be changed by user. FIGs. 4a-4d display four non-limiting examples of defined actions 326. As seen in FIG. 4a, a user may swipe horizontally straight to unlock a door. The horizontal swipe is a defined action 326 for a door in the example of FIG. 4a. As seen in FIG. 4b, a user may zig-zag swipe to call an elevator car. The zig-zag swipe is a defined action 326 for an elevator car in the example of FIG. 4b. As seen in FIG. 4c, a user may utilize a circular swipe to adjust a climate control system. The circular swipe is a defined action 326 for a climate system in the example of FIG. 4c. As seen in FIG. 4d, a user may utilize a "w" shaped swipe to adjust a lighting system. The "w" shaped swipe is a defined action 326 for a lighting system in the example of FIG. 4d.

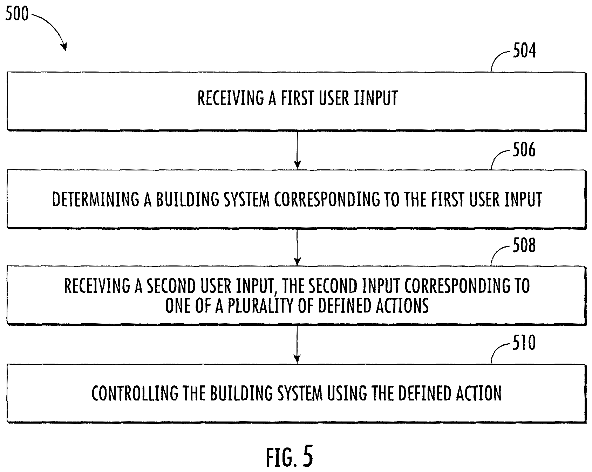

Referring now to FIG. 5, while referencing components of FIGs. 1-4. FIG. 5 shows a flow chart of method 500 of controlling building systems, in accordance with an embodiment of the disclosure. At block 504, a first user input is received. As described above, the first user input may be a touch and or dynamic action on the touch screen 251a on the user mobile device. At block 506, a building system corresponding to the first user input is determined. At block 508, a second user input is received. The second input corresponds to one of a plurality of defined actions. At block 510, the building system is controlled using the defined action. As mentioned above, the building system may be at least one of a door system 205, an elevator system 204, a lighting system 203, and a climate control system 202. In an embodiment, the controlling of block 510 may include unlocking a door of the door system 205. In an embodiment, the controlling of block 510 may include calling an elevator car of the elevator system 204. In an embodiment, the controlling of block 510 may include adjusting a light of the lighting system 203. In an embodiment, the controlling of block 510 may include adjusting an output of the climate control system 202.

The first user input of block 504 may be broken down into user sub-inputs. For example, a first user sub-input may result in the generation of a list 308 as shown in Fig. 3. The list 308 may include a plurality of building systems. In an embodiment, the first sub-sub input, may be a press and hold. The press and hold may on the arrow 306 as shown in FIG. 2. A second user sub-input may select a building system from the list 308. In an embodiment, the second user sub-input may be a drag in hold over the desired building system in the list 308.

Alternatively, rather than generating a list 308 to select a building system, the user may desire to control a selected building system on a home control icon 304. As mentioned above, prior to the first user input, a user interface 300 is generated depicting a home control icon 304 and the selected building system appears on the home control icon 304. If the user desires to control that selected building system then the user will perform a first user input that is a defined action 326 corresponding to the selected building system depicted on the home control icon 304. Then the first user input is used to satisfy the second user input of block 508 and the user will be able to control the building system in block 510. Regardless of the building system selected to control, the control screen 302 on the user interface 300 may default back to the home control icon 304 depicting the selected building system.

Prior to receiving the first user input, a user of a user mobile device 208a may define a defined action 326 for each building system, as mentioned above. Thus, the user may perform a user input and a defined action 326 is created in response to the user input. For instance, the user input may be a zig-zag swipe (see FIG. 4b) from which a defined action 326 is created representing the zig-zag swipe performed by the user and then the defined action 326 is assigned to a building system. The defined action 326 is then stored in a database 263 and may be assigned to the specific user of the user mobile device 208a that performed the user input to create the defined action 326. The defined action 326 may also be applied to a broad group of users.

While the above description has described the flow process of FIG. 5 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments.

When implemented on a general-purpose microprocessor, the computer program code segments configure the microprocessor to create specific logic circuits.

## Claims

1. A method of controlling a building system by a controller (206) of a building control system (200) which comprises a plurality of building systems (202-205), the method comprising the steps of:
receiving a user input from a mobile device (208a), wherein the user input is for establishing a defined action, the user input being a motion input through a building system control application on the mobile device (208a);
assigning the defined action to control a building system among the plurality of building systems (202-205);
storing the defined action in a database (263) in association with a user of the mobile device and the building system, the user having user control permissions (325) granting the user an ability to control the building system;
receiving a first user input (504) from the mobile device (208a), the first user input being input through the building system control application to select the building system among the plurality of building systems (202-205);
receiving a second user input (508) from the mobile device (208a), the second user input corresponding to the defined action and being input through the building system control application; and
controlling (510) the building system using the defined action.

2. The method of claim 1, wherein the step of controlling (510) further comprises the steps of :
unlocking a door of the door system (205); and/or
calling an elevator car of the elevator system (204).

3. The method of claim 1 or 2, wherein the step of controlling (510) further comprises the steps of :
adjusting a light of the lighting system (203); and/or
adjusting an output of the climate control system (202).

4. A building control system (200) comprising:
a processor (264);
a memory (262) comprising computer-executable instructions that, when executed by the processor (264), cause the processor (264) to perform operations according to the method of any of claims 1 to 3.

5. A computer program product tangibly embodied on a computer readable medium, the computer program product including instructions that, when executed by a processor (264), cause the processor (264) to perform operations according to the method of any of claims 1 to 3.

## Patentansprüche

1. Verfahren zum Steuern eines Gebäudesystems von einer Steuerung (206) eines Gebäudesteuerungssystems (200), das eine Vielzahl von Gebäudesystemen (202-205) umfasst, wobei das Verfahren die folgenden Schritte umfasst:
Empfangen einer Benutzereingabe von einer Mobilvorrichtung (208a), wobei die Benutzereingabe für die Ermittlung einer definierten Aktion ist, wobei die Benutzereingabe eine Bewegungseingabe durch eine Gebäudesystemsteuerungsanwendung auf der Mobilvorrichtung (208a) ist;
Zuweisen der definierten Aktion, um ein Gebäudesystem unter der Vielzahl von Gebäudesystemen (202-205) zu steuern;
Speichern der definierten Aktion in einer Datenbank (263) in Verbindung mit einem Benutzer der Mobilvorrichtung und dem Gebäudesystem, wobei der Benutzer Benutzersteuerungsberechtigungen (325) aufweist, die dem Benutzer eine Fähigkeit gewähren, um das Gebäudesystem zu steuern;
Empfangen einer ersten Benutzereingabe (504) von der Mobilvorrichtung (208a), wobei die erste Benutzereingabe durch die Gebäudesystemsteuerungsanwendung eingegeben wird, um das Gebäudesystem unter der Vielzahl von Gebäudesystemen (202-205) auszuwählen;
Empfangen einer zweiten Benutzereingabe (508) von der Mobilvorrichtung (208a), wobei die zweite Benutzereingabe der definierten Aktion entspricht und durch die Gebäudesystemsteuerungsanwendung eingegeben wird; und
Steuern (510) des Gebäudesystems, wobei die definierte Aktion verwendet wird.

2. Verfahren nach Anspruch 1, wobei der Schritt des Steuerns (510) ferner die folgenden Schritte umfasst:
Entsperren einer Tür des Türsystems (205); und/oder
Rufen einer Aufzugkabine des Aufzugsystems (204).

3. Verfahren nach Anspruch 1 oder 2, wobei der Schritt des Steuerns (510) ferner die folgenden Schritte umfasst:
Anpassen eines Lichts des Lichtsystems (203); und/oder
Anpassen einer Leistung des Klimasteuerungssystems (202).

4. Gebäudesteuerungssystem (200), das Folgendes umfasst:
einen Prozessor (264);
einen Speicher (262), der computerausführbare Anweisungen umfasst, die, wenn vom Prozessor (264) ausgeführt, den Prozessor (264) veranlassen, Operationen nach dem Verfahren nach einem der Ansprüche 1 bis 3 durchzuführen.

5. Computerprogrammprodukt, das greifbar auf einem computerlesbaren Medium verkörpert ist, wobei das Computerprogrammprodukt Anweisungen beinhaltet, die, wenn vom Prozessor (264) ausgeführt, den Prozessor (264) veranlassen, Operationen nach dem Verfahren nach einem der Ansprüche 1 bis 3 durchzuführen.

## Revendications

1. Procédé de commande d'un système de construction par un dispositif de commande (206) d'un système de commande de construction (200) qui comprend une pluralité de systèmes de construction (202-205), le procédé comprenant les étapes :
de réception d'une entrée utilisateur d'un dispositif mobile (208a), dans lequel l'entrée utilisateur est destinée à établir une action définie, l'entrée utilisateur étant une entrée de mouvement à travers une application de commande de système de construction sur le dispositif mobile (208a) ;
d'attribution de l'action définie pour commander un système de construction parmi la pluralité de systèmes de construction (202-205) ;
de stockage de l'action définie dans une base de données (263) en association avec un utilisateur du dispositif mobile et du système de construction, l'utilisateur ayant des autorisations de commande d'utilisateur (325) octroyant à l'utilisateur la capacité de commander le système de construction ;
de réception d'une première entrée utilisateur (504) du dispositif mobile (208a), la première entrée utilisateur étant entrée à travers l'application de commande de système de construction pour sélectionner le système de construction parmi la pluralité de systèmes de construction (202-205) ;
de réception d'une seconde entrée utilisateur (508) du dispositif mobile (208a), la seconde entrée utilisateur correspondant à l'action définie et étant entrée à travers l'application de commande de système de construction ; et
de commande (510) du système de construction à l'aide de l'action définie.

2. Procédé selon la revendication 1, dans lequel l'étape de commande (510) comprend en outre les étapes :
de déverrouillage du système de porte (205) ; et/ou
d'appel d'une cabine d'ascenseur du système d'ascenseur (204) .

3. Procédé selon la revendication 1 ou 2, dans lequel l'étape de commande (510) comprend en outre les étapes :
de réglage d'une lumière du système d'éclairage (203) ; et/ou
de réglage d'une sortie du système de climatisation (202) .

4. Système de commande de construction (200) comprenant :
un processeur (264) ;
une mémoire (262) comprenant des instructions exécutables par ordinateur qui, lorsqu'elles sont exécutées par le processeur (264), amènent le processeur (264) à exécuter des opérations en fonction du procédé selon l'une quelconque des revendications 1 à 3.

5. Produit de programme informatique intégré de manière tangible sur un support lisible par ordinateur, le produit de programme informatique comportant des instructions qui, lorsqu'elles sont exécutées par un processeur (264), amènent le processeur (264) à exécuter des opérations en fonction du procédé selon l'une quelconque des revendications 1 à 3.
